# EUROPEAN PATENT APPLICATION

(11) **EP 0 982 954 A1**
(43) Date of publication of application: **01.03.2000**
(21) Application number: 99306452.6
(22) Date of filing: 17.08.1999
(51) Int. Cl.: H04Q 3/00

(54) **System and method for automated inteligent call processing**

(30) Priority: 27.08.1998 US 141442
(71) Applicant: LUCENT TECHNOLOGIES INC., Murray Hill, New Jersey 07974-0636 (US)
(72) Inventor: August, Katherine Grace, Matawan, New Jersey 07747 (US); Sizer II, Theodore, Little Silver, New Jersey 07739 (US)
(74) Representative: Watts, Christopher Malcolm Kelway, Dr.

(57) **Abstract**

A technique for dynamic call processing which utilizes information collected from the calling party's information appliance to route an incoming call. A variety of information is dynamically captured and stored by the calling party's information appliance, e.g., telephone, computer, set top box and the like, over time. The type of information includes, but its not limited to, items such as personal data, credit information, purchasing history, market study data, and geographical information. In accordance with the technique, when the calling party places a call to a call center location, the information stored in the calling party's information appliance is accessed and used to route the call to an appropriate agent in the call center. Advantageously, incoming call center calls are dynamically routed without the reliance on static applications, databases or other traditional network management techniques.

## Description

### Field of the Invention

The present invention relates to the distribution of telecommunication calls and, more particularly, to routing calls in automatic call distribution systems.

### Background of the Invention

Call centers are well-known telecommunications systems that enable a group of agents to serve incoming and/or outgoing calls, with the calls being distributed and connected to particular ones of the agents in a variety of ways. Businesses frequently serve their customers through the use of automatic call distributor ("ACD") switching systems which allow incoming calls to be routed to one of a plurality of agent positions for handling each call. One of the primary responsibilities of the ACD is to distribute calls to various destinations where agents are located and available to process such incoming customer calls. Call centers that serve these incoming calls often use network related information such as ANI (the calling number) and DNIS (the called number) to determine what treatment to give each incoming call before the call is routed to a particular agent and answered. Typically, the agent routing determination made by the ACD in such call center arrangements is based on a predetermined routing algorithm or set of rules.

For example, one prior art technique is that presented in U.S. Patent No. 4,737,983, Automatic Call Distributor Telephone Service, issued April 12, 1988, to J. C. Frauenthal et al. This patent discloses an arrangement whereby each of the call center sites periodically transmits a message to an update processor specifying the length of call queues in each of the sites. Based on the length of these queues, the update processor assigns new incoming calls to an appropriate site with the objective of minimizing the expected delay for that call.

Another prior art technique directed at the routing of calls is described in U.S. Patent No. 4,191.860, Data Base Communication Call Processing Method, issued March 4, 1980, to R. P. Weber. This patent discloses an arrangement for routing inbound calls such as well-known "800" or "900" type calls to ones of a plurality of destinations based on the geographic location of the caller, the plurality of destination sites, and the load status, i.e., the number of calls in progress to a particular site exceeds a predetermined threshold, of each destination site.

In addition to using queue waiting times and geographic attributes as in the above-described techniques, other well-known call processing techniques utilize specialized databases containing information about particular customers. Typically, such specialized databases reside in the network infrastructure and are maintained by the network's operator. Thus, when one of these customers places a call to the call center the information contained in the database is accessed to assist in routing the calls. The stored information about the customer includes such items as: purchasing preferences, payment methods, geographic information, employment information, etc. Of course, such call processing arrangements require previous knowledge of the caller, pre-registration of the caller's information in the database to be accessed during call processing, and frequent updates to the database to insure that the relevant data is used to route the incoming call.

While the above-described techniques are effective in the routing of calls in call center arrangements (and other similar solutions), each share a characteristic which somewhat limits the flexibility of effectively routing calls. That is, such prior art solutions employ and rely on "static" applications or information in routing incoming calls. More particularly, these call routing strategies such as geographic routing, area code routing, private customer databases, statistical predictions, and balance loading all involve predetermined processes for routing incoming calls in a call center type arrangement and do not utilize any caller specific data which may be available during actual call processing to route the call.

Therefore, a need exists for call routing technique which makes routing decisions for individual calls through the capture and utilization of information made during the processing of incoming calls.

### Summary of the Invention

The present invention provides a technique for dynamic call processing which utilizes information collected from the calling party's information appliance to route an incoming call. A variety of information is dynamically captured and stored by the calling party's information appliance, e.g., telephone, computer, set top box and the like, over time. The type of information includes, but its not limited to, items such as personal data, credit information, purchasing history, market study data and geographical information. In accordance with the invention, when the calling party places a call to a call center location, the information record stored in the calling party's information appliance is accessed and used to route the call to an appropriate agent in a call center. Advantageously, incoming call center calls are dynamically routed without the reliance on static applications, databases or other traditional network management techniques.

In accordance with the preferred embodiment of the invention, the information stored in the calling party's information appliance, e.g., standard telephone, computer, cellular telephone, pager, and the like, is encoded and transmitted to the appliance using the relevant transmission media for the that type of appliance. In accordance with various embodiments of the invention, the information stored in the calling party's information appliance is captured by the appliance by digitally encoding and modulating the source signal or tone using amplitude shift keying ("ASK") wherein the information is added to the source signal, e.g., the broadcast of a television advertisement, in the video and/or audio component of the source signal, so that the information is not perceptible to a viewer of the program but has sufficient intensity for signal transmission and detection in the appliance. In accordance with further embodiments of the invention, the information associated is digitally encoded by modulating the source signal or tone using frequency shift keying ("FSK") or phase shift keying ("PSK") wherein the information is again added to the source signal, in the video and/or audio component of the source signal, so that the information is not perceptible to a viewer of the program but has sufficient intensity for signal transmission and detection in the appliance.

In accordance with the preferred embodiment, the information stored in the information appliance is utilized when a user of the appliance, e.g., a consumer, places a telephone call to a particular called party, e.g., a mail order company, using a communications network. The communications network in extending the call between the two parties, in accordance with the invention, has access to the information record stored in the user's information appliance. Alternatively, in further embodiments of the invention, the stored information is sent directly to the communications network by the appliance in the initial establishment of the communication. In accordance with the invention, the communications network through its communications switches and network applications employ the information received from the user's information appliance to route the call to an appropriate call center.

### Brief Description of the Drawings

FIG. 1 is a block diagram of a call center system configured in accordance with the principles of the invention;
FIG. 2 is a flow diagram of operations performed within the call center system of FIG. 1 in accordance with the principles of the invention; and
FIG. 3 shows an illustrative consumer call processing and routing example employing the call center system of FIG. 1 and the illustrative operations of FIG. 2.

Throughout this disclosure, unless otherwise noted, like elements, blocks, components or sections in the figures are denoted by the same reference designations.

### Detailed Description

The present invention provides a technique for dynamic call processing which utilizes information collected from the calling party's information appliance to route an incoming call. A variety of information is dynamically captured and stored by the calling party's information appliance, e.g., telephone, computer, set top box and the like, over time. The type of information includes, but its not limited to, items such as personal data, credit information, purchasing history, market study data and geographical information. In accordance with the invention, when the calling party places a call to a call center location, the information record stored in the calling party's information appliance is accessed and used to route the call to an appropriate agent in a call center. Advantageously, incoming call center calls are dynamically routed without the reliance on static applications, databases or other traditional network management techniques.

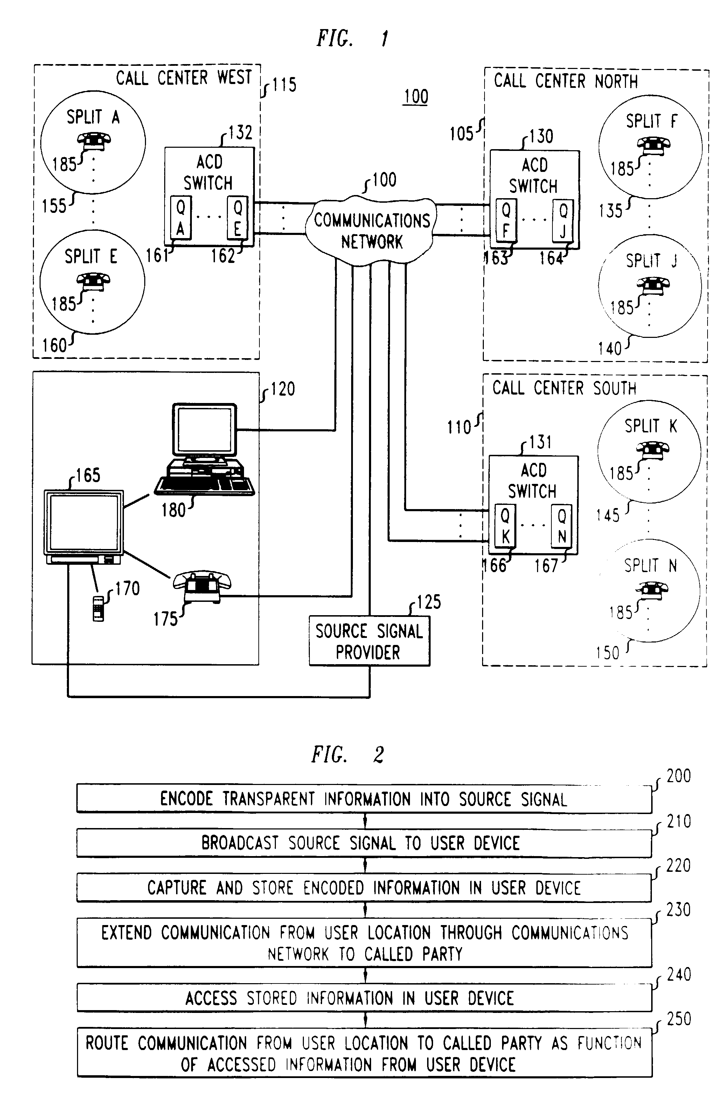

FIG. 1 is a block diagram of a call center system 100 configured in accordance with the principles of the invention. In accordance with this embodiment of the invention, call center system 100 comprises multiple, three in this example, networked call centers 105, 110, and 115, respectively designated as "north", "south", and "west". It should be noted that for clarity of explanation, the illustrative embodiments described herein are presented as comprising individual functional blocks or combinations of functional blocks. The functions these blocks represent may be provided through the use of either shared or dedicated hardware, including, but not limited to, hardware capable of executing software. Illustrative embodiments may comprise digital signal processor ("DSP") hardware and/or software performing the operations discussed below. Further, in the claims hereof any element expressed as a means for performing a specified function is intended to encompass any way of performing that function, including, for example, a) a combination of circuit elements which performs that function; or b) software in any form (including, therefore, firmware, object code, microcode or the like) combined with appropriate circuitry for executing that software to perform the function. The invention defined by such claims resides in the fact that the functionalities provided by the various recited means are combined and brought together in the manner which the claims call for. Applicants thus regard any means which can provide those functionalities as equivalent as those shown herein.

Call centers 105, 110, and 115 are interconnected with each other, and with callers who are potential users of the call centers. One such potential user location 120 is shown in FIG.1 illustratively comprising television 165, remote controller 170, telephone 175, and computer 180. Each call center 105, 110, and 115 includes an automatic call distribution ("ACD") switch 130-132, respectively, and a plurality of agent position terminals 185, such as telephones or computer workstations. As will be appreciated by those skilled in the art, such call centers are populated with individuals, e.g., agents, specialists, operators and the like, responsible for receiving incoming calls to the center and interacting with the calling party to assist that party with their particular issue which gave rise to their initiating the call to the call center. These agents, specialists and/or operators typically have varying degrees of expertise and knowledge regarding the particular products or services associated with the entity, e.g., corporation, which has established the call center for receiving calls from their customer base. For example, particular agents or specialists in a call center may be fluent in a particular language such that incoming calls requiring that language skill are routed to those agents or specialists. Further, for example, the agents or specialists may have certain expertise regarding products from a particular manufacturer so that incoming calls to the call center regarding such products are handled by the appropriate individual. As discussed in detail below, the present invention provides a technique for dynamic call processing which utilizes information, e.g., language preferences, collected from the calling party's information appliance to route an incoming call to such agents, specialists, operators and the like, without the reliance on traditional network database or network management procedures.

The ACD switches 130-132 connect terminals 185 to communications network 100 such as a telecommunications network. ACD switches 130 and 131 of call centers 105 and 110 are further shown as being directly connected with each other via a dedicated trunk, voice link, or data link 190. In each call center 105-115, the agents and their terminals 185 are divided into one or more splits 135-140, 145-150, and, 155-160 respectively, and the respective ACD switch 105-115 defines a waiting-call queue 163-164, 166-167, and 161-162 for each of the splits 135-140, 145-150, and 155-160, respectively. As will be appreciated, any one or more of the waiting-call queues may comprise several priority queues, each for holding waiting calls of a different priority.

In accordance with this embodiment of the invention, call center system 100 includes source signal provider 125 such as a cable or broadcast television provider. In accordance with the invention, source signal provider 125 supplies signal 126 to user location 120. For example, signal 126 carries, *inter alia,* the broadcast signals of a variety of programming content for viewing at user location 120 by television 165. In addition, in accordance with the invention, signal 126 carries certain other information embedded within the broadcast signal for the individual programming signals. Such other information is encoded information in the signal and is not perceptible to a viewer of the individual program but has sufficient intensity for signal transmission and detection by an information appliance within user location 120, e.g., television 165, computer 180, and/or telephone 175. The use of transparently encoded information to route calls within call center system 100 in accordance with the invention is discussed in greater detail below.

In accordance with various embodiments of the invention, the information transparently encoded within signal 126 is realized through the use of ASK encoding which modulates the source signal, e.g., signal 126, and adds the transparent information to the source signal so that the information is not perceptible to a viewer of the program but have sufficient intensity for signal transmission and detection in accordance with the various aspects of the invention. The use of ASK encoding and decoding for such purpose is described in greater detail in U.S. Patent No. 5,663,766, Digital Data Encoding in Video Signals Using Data Modulated Carrier Signals at Non-Peaks in Video Spectra, issued September 2, 1997, to T. Sizer (a co-applicant in the present application) and assigned to the same assignee as the present application, which is hereby incorporated by reference for all purposes. In accordance with further embodiments of the invention, FSK encoding or PSK encoding are employed for adding the transparent information to the source signal, e.g., signal 126, so that the information is not perceptible to a viewer of the program but have sufficient intensity for signal transmission and detection in accordance with the various aspects of the invention. The details of such FSK and PSK encoding/decoding are discussed in U.S. Patent No. 5,633,766 discussed above and which is incorporated by reference herein.

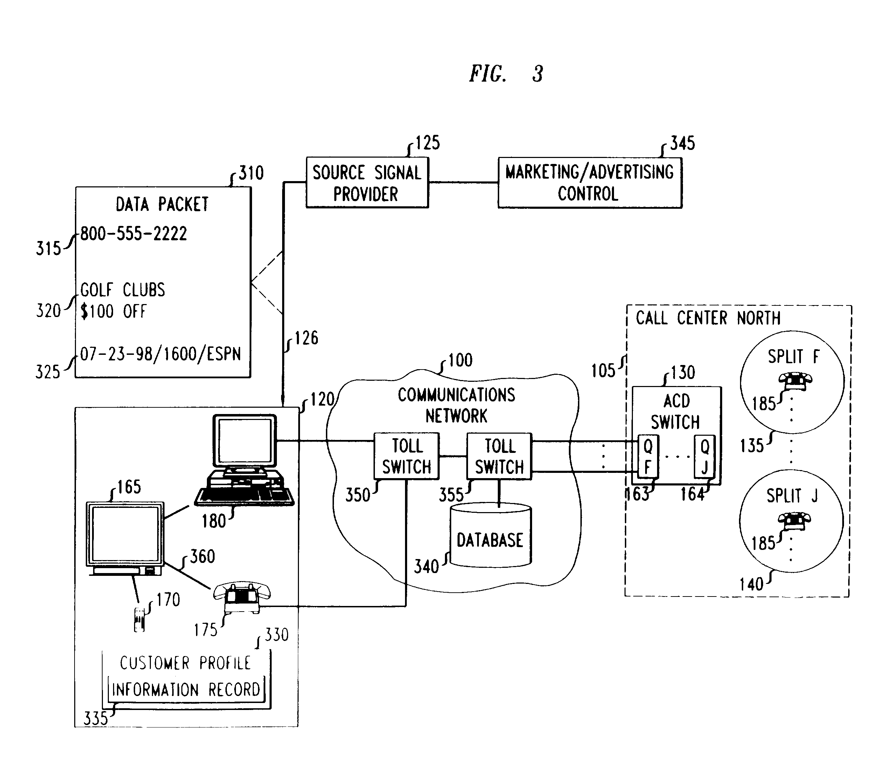

Significantly, in accordance with the invention, information appliances within user location 120 capture the transparently encoded information transmitted from source signal provider 125 and store such information for use in determining an appropriate call center routing for a call from user location 120 through communications network 100, and, ultimately, to an agent located within one of call centers 105-115. The routing of such call center calls in accordance with the invention will now be discussed in conjunction with FIG. 2 and FIG. 3.

More particularly, FIG. 2 shows a flow diagram of operations performed within a call center, e.g., call center system 100, in accordance with the principles of the invention, and FIG. 3 shows an illustrative consumer call processing and routing example employing call center system 100 and the illustrative operations of FIG. 2. Turning our attention to the illustrative operations of FIG. 2, in accordance with the invention, the transparent information to be transmitted and stored by the user's information appliance is encoded (block 200) in the source signal. As described above, the source signal is illustratively a television signal provided by a cable television provider which is broadcast (block 210) in a conventional manner between the cable television provider's network and the user's information appliance. As the signal is received at the user location, the encoded transparent information in the source signal is captured and stored (block 220) by the user device. As mentioned above, the user device can be any type of information appliance such as a television, personal computer, cellular telephone and the like. It will further be appreciated, that the capture and storage of the encoded information may take place in the device actually receiving the signal, or another device connected to the device receiving the signal.

Thereafter, the user initiates a communication from the user location into a communications network for extension to a particular called party (block 230.). For example, the user may be watching a particular television program and may respond to an advertisement for a product by placing a telephone call using the number shown in the advertisement. Such an illustrative embodiment of the invention is discussed further below in conjunction with FIG. 3. As the communication is extended from the user through the communications network, in accordance with the invention, a query is made (block 240) from the communications network to the user information appliance in order to access the stored information therein. In accordance with the invention, the communication from the user, i.e., calling party, is routed to the called party as a function of the information stored and accessed from the user information appliance (block 250.)

FIG. 3 shows an illustrative consumer call processing and routing example employing call center system 100 of FIG. 1 in conjunction with the illustrative operations of FIG. 2. In accordance with the illustrative embodiment of FIG. 3, communications network 100 is a telecommunications network which includes, *inter alia,* conventional switching equipment such as toll switch 350 and toll switch 355 which route telephone calls between calling and called parties. Source signal provider 125 includes marketing/advertising control 345 which assists in the content, delivery and management of advertisements delivered by signal 126 supplied to user location 120. In particular, as discussed above, signal 126 includes transparent information which is imperceptible by the user but is detected and stored by information appliances at user location 120. In accordance with this illustrative embodiment of the invention, the transparent information is encoded in well-known data packets using either ASK, FSK or PSK encoding as described above. For example, packet 310 is an illustrative packet which includes encoded information such as telephone number 315, text message 320 and specialized marketing tag 325. As signal 126 is received at user location by, e.g., television 165, the encoded information included in packet 310 in signal 126 is decoded and stored by the information appliance. Illustratively, specialized marketing tag 325 is transparently encoded in signal 126. In accordance with the illustrative embodiment of FIG. 3, the transparent information is stored by telephone 175 in information record 335 of consumer profile 330 which includes consumer specific information such as name, address, and credit card numbers. Illustratively, the decoded information from television 165 is exchanged with telephone 175 across connection 360 during periodic data transmissions between the two information appliances.

Thereafter, a user, i.e., consumer, while viewing certain programming content on television 165 may desire to call a particular advertiser in response to some displayed content. For example, telephone number 315 may be displayed along with text message 320 indicating that a particular product is presently available from an advertiser at some discount. Thus, the consumer will utilize telephone 175 to call the advertiser at telephone number 315, e.g., a toll-free "800" number. As will be appreciated, such toll-free numbers are typically routed to call centers for handling by individual agents. As such, a telephone call is extended in a conventional manner from user location 120 through communications network 100. In accordance with the invention, the routing of the extended call to a particular call center is accomplished by accessing and using the information stored in the information appliance located in user location 120. More particularly, in accordance with the present embodiment of the invention, toll switch 350 and/or toll switch 355 will access consumer profile 330 stored in telephone 175 and will use the information stored in consumer profile 330, e.g., information record 335, to route the call to a particular call center, e.g., call center 105. For example, specialized marketing tag 325 can be used to identify the date, time, and channel that a particular advertisement was made available to the consumer, and that information can be used effectively to route an incoming call from that consumer to the appropriate call center agent. Advantageously, in accordance with the invention, incoming call center calls are dynamically routed without the reliance on static applications, databases or other traditional network management techniques. In further embodiments of the invention, toll switch 355 may combine the information accessed from user location 120 with other information stored in network database 340 of communications network 100 to determine the appropriate call center routing.

As will be appreciated, the routing decision made in accordance with the invention can be implemented in a variety of ways. For example, in further embodiments of the invention, the information appliance itself makes the call routing decision as a function of the stored information therein. For example, information appliance 175 (see, FIG. 3) using consumer profile 330 can route a call from user location 120 to a particular call center e.g., call center 105, in accordance with the principles of the invention as described above. In such embodiments, the communications network is used to extend the call in accordance with routing instructions supplied by the information appliance, however, the communications switches within the network, e.g., toll switch 350, are not involved in the actual call routing decision which selects the destination call center. The routing decision is made by the information appliance and communicated to the communications network for the actual routing of the call.

In still further embodiments of the invention, the call routing decision is made locally within the call center through the access of the stored information in the information appliance directly from the call center. For example, upon receipt of an incoming call to call center 105 (see, FIG. 3) by ACD switch 130, the stored information from the calling party's information appliance, e.g., telephone 175, is accessed directly by ACD switch 130. Using the accessed information, the routing decision for the call is made locally within call center 105 to the appropriate destination, e.g., split 135.

## Claims

1. A method for routing a call in a communications network between a calling party and a particular one destination of a plurality of destinations for the call, the method comprising:
extending the call between a information appliance used by the calling party to initiate the call through the communications network;
accessing, from the communications network, a record of information stored on the information appliance; and
routing the call to the particular one destination of the plurality of destinations as a function of the record of information accessed from the information appliance.

2. The method of claim 1 wherein each destination of the plurality of destinations comprise a call center for connecting the call to a particular one agent of a plurality of agents.

3. The method of claim 2 wherein the record of information was transmitted in an encoded signal to the information appliance.

4. The method of claim 3 wherein the encoded signal is generated using amplitude shift keying encoding, frequency shift keying encoding, or phase shift keying encoding.

5. The method of claim 3 wherein the communications network is a telecommunications network.

6. A method of routing a call to a particular one call center of a plurality of call centers available for processing the call, the method comprising:
extending, through a telecommunications network, the call between a calling party and a called party, the call being initiated by the calling party from a information appliance, and the called party being associated with the plurality of call centers;
in response to the extending the call, accessing, from the telecommunications network, at least one information record from the information appliance; and
routing the call to the call center as a function of the at least one information record accessed from the information appliance.

7. The method of claim 6 wherein the information appliance is a television.

8. The method of claim 7 further comprising:
transmitting a source signal to the television, the source signal supplying a plurality of programs such that at least one program is encoded with the information record, the information record being visually imperceptible during a display of the program on the television; and
extracting and storing the information record in the information appliance.

9. The method of claim 6 wherein the source signal is encoded using amplitude shift keying encoding, frequency shift keying encoding or phase shift keying encoding.

10. The method of claim 9 wherein the information record includes a plurality of consumer preferences associated with calling party.

11. A communications method comprising:
transmitting a source video signal to a user location, the source video signal being received by a communications device, the source video signal supplying a plurality of programs such that at least one program is encoded with a information record, the information record being visually imperceptible during a viewing of the program;
decoding and storing the information record in the communications device;
in response to a stimulus received by a user at the user location from one of the programs, initiating a call over a communications network from the user to a called party, the called party being associated with a plurality of call centers;
in response to the initiating the call, accessing the information record stored in the communications device; and
routing the call to a particular call center of the plurality of call centers as a function of the information record accessed from the communications device.

12. The method of claim 11 wherein the accessing the information is initiated from a communications switch within the communications network.

13. The method of claim 12 wherein the information record includes a plurality of consumer preferences associated with the user.

14. The method of claim 13 wherein the call center includes a plurality of agents and the call is routed to a particular one agent.

15. A media communications system comprising:
a transmitter for supplying a source signal to at least one subscriber location, the source signal comprising a plurality of programs such that at least one program is encoded with a information record, the information record being visually imperceptible during a viewing of the program;
a receiver for receiving the source signal at the subscriber location, decoding the encoded information record and storing the decoded information record in a information appliance within the subscriber location;
a communications network for extending a connection between the information appliance and a particular called destination, the called destination having a plurality of call centers; and
at least one communications switch that, in response to the extending the connection, accesses the information record stored in the information appliance to complete the connection between the information appliance and a particular call center of the plurality of call centers.

16. The media communications system of claim 15 wherein the information record is encoded using amplitude shift keying encoding, frequency shift keying encoding, or phase shift keying encoding.

17. The media communications system of claim 16 wherein the source signal is a television signal.

18. The media communications system of claim 17 wherein the source signal is supplied from a cable television provider.

19. The media communications system of claim 18 wherein the information appliance is a television.

20. The media communications system of claim 19 wherein the information record contains a set of predefmed subscriber purchasing preferences.

21. The media communications system of claim 19 wherein the extending the connection is initiated by a subscriber in response to the viewing of the program.
